# EUROPÄISCHE PATENTSCHRIFT

(11) **EP 2 166 305 B1**
(45) Veröffentlichungstag und Bekanntmachung des Hinweises auf die Patenterteilung: **16.05.2012**
(21) Anmeldenummer: 09100045.5
(22) Anmeldetag: 15.01.2009
(51) Int. Cl.: G01B 11/25, F16P 3/14

(54) **Beleuchtungseinheit und Verfahren zur Projektion eines Beleuchtungsmusters**
Illumination unit and method for projecting an illumination pattern.
Unité d'éclairage et procédé de projection d'un motif d'éclairage

(30) Priorität: 23.09.2008 EP 08105416; 22.12.2008 EP 08106026
(43) Veröffentlichungstag der Anmeldung: 24.03.2010
(73) Patentinhaber: SICK AG, 79183 Waldkirch (DE)
(72) Erfinder: Hammes, Dr. Markus, 79104, Freiburg (DE)
(74) Vertreter: Hehl, Ulrich

(56) Entgegenhaltungen:
- WO-A-01/51886
- DE-U1-202007 010 884
- US-A- 4 742 237
- US-A1- 2008 106 746

## Beschreibung

Die Erfindung betrifft eine Beleuchtungseinheit mit einem im Strahlengang einer Lichtquelle angeordneten optischen Mustererzeugungselement und ein Verfahren zur Projektion eines Beleuchtungsmusters in einen Überwachungsbereich nach dem Oberbegriff von Anspruch 1 beziehungsweise 10.

Kameras werden seit langem zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Ist die zu überwachende Szenerie kontrastschwach oder weist Bereiche mit wenig Struktur auf, so wird dadurch die Erkennung sicherheitskritischer Ereignisse erschwert oder sogar verhindert. In ganz besonderem Maße gilt dies für dreidimensionale Überwachungsverfahren, die auf Stereoskopie beruhen. Dabei werden Bilder der Szenerie mit einem Empfangssystem, das im Wesentlichen aus zwei zueinander beabstandeten Kameras besteht, aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet.

Stereoskopische Kamerasysteme bieten gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden. Beispielsweise ist es möglich, Bewegungen des Roboters selbst oder Vorbeibewegungen eines Körperteils an der gefährlichen Maschine in einer unterschiedlichen Tiefenebene als ungefährlich zu erkennen. Das wäre mit einem zweidimensionalen System von einem unzulässigen Eingriff nicht unterscheidbar.

Im Rahmen der Sicherheitstechnik besteht jedoch für eine zuverlässige Sicherheitsfunktion über das sichere Erkennen eines Eingriffs in den bereitgestellten Bilddaten hinaus der zusätzliche Anspruch, diese dreidimensionalen Bilddaten in Form einer dichten Tiefenkarte zu erzeugen, also einen zuverlässigen Abstandswert für jeden Bildbereich und bevorzugt nahezu jeden Bildpunkt verfügbar zu haben. Große strukturlose Flächen oder zueinander ähnliche Strukturmerkmale können eine eindeutige Zuordnung von Bildbereichen beim Auffinden der Korrespondenzen zwischen den Strukturelementen der Bilder verhindern. Dabei sind zumindest zwei Arten von Fehlern denkbar, nämlich ein Scheitern des Auffindens einander entsprechender Strukturelemente oder eine fehlerhafte Zuordnung. Die Folge sind Lücken in den dreidimensionalen Bildern oder fehlerhafte Berechnungen der Entfernungen. Beides ist für sicherheitstechnische Anwendungen höchst gefährlich, da ein unzulässiger Eingriff unerkannt bleiben oder eine falsche Entfernung zugeordnet werden könnte. Die Abschaltung der Gefährdungsquelle unterbleibt dann möglicherweise, weil der Eingriff fehlerhaft als unkritisch eingestuft wird.

Die gut lokalisierbaren Bildmerkmale können entweder für passive Stereoskopie bereits natürlicherweise in Form von Kanten oder Texturen in der überwachten Szenerie vorhanden sein oder für aktive Stereoskopie der Szenerie als Beleuchtungsmuster aufgeprägt werden.

Passive Stereomesssysteme haben keinen Einfluss auf die Qualität und Dichte der Bildmerkmale. Zu einer möglichen Struktur- oder Kontrastschwäche tritt hier schlicht mangelnde Helligkeit als mögliche Fehlerquelle hinzu. Deshalb liegt in der Praxis eine Tiefeninformation nur punktuell vor, die keine zuverlässige Sicherheitsfunktion zulässt. Selbstverständlich ist für eine vorgegebene Anwendung möglich, die Szenerie entsprechend auszuwählen oder zu präparieren, aber dies ist umständlich und schafft zusätzliche Abhängigkeiten. Passive Systeme sind aber den aktiven nicht in jeder Beziehung unterlegen, denn hier ist die minimale Objektgröße zumindest im Idealfall nur durch die Auflösung der Stereokamera begrenzt, und Übergänge zwischen vorgelagertem Objekt und Hintergrund werden als gute Merkmale für die Stereokorrelation erkannt. Solche Bilder entsprechen auch dem natürlichen Seheindruck und eignen sich für die Visualisierung zur Diagnose oder Konfiguration.

Aktive Stereomesssysteme verwenden zusätzlich zu dem Empfangssystem eine Beleuchtungseinheit, deren Funktion ist, die beobachtete Szenerie mit strukturiertem Licht zu beleuchten und so durch die zahlreichen Hell-Dunkel-Übergänge in den Bildern Merkmale zu erzeugen, anhand derer der Stereoalgorithmus zuverlässige und flächendeckende Abstandsdaten aus der Szenerie extrahieren kann. Solche Muster können auch selbstunähnlich sein, also für die vorliegenden Überwachungen in erster Linie keine bezüglich Verschiebungen zueinander symmetrischen Bereiche aufweisen. Mit Hilfe optischer Filter kann das Muster deutlicher sichtbar gemacht und zugleich eine Übersteuerung der Bildsensoren vermieden werden.

Das Beleuchtungsmuster ermöglicht weitgehend flächendeckende Tiefeninformationen. Nachteilig ist, dass eine visuelle Orientierung wegen der projizierten Muster nahezu unmöglich ist und ein solches Bild deshalb als Grundlage für die Visualisierung weniger geeignet ist. Außerdem entstehen in manchen Situationen Schwierigkeiten, Objektränder präzise zu detektieren, etwa bei Okklusionen an Übergängen von vorgelagerten Objekten in den Hintergrund. Um die Sicherheit zu erhalten, muss dann eine minimale Objektgröße mit Sicherheitspuffer gewählt werden, so dass die effektive Auflösung sinkt.

Herkömmlich werden Beleuchtungseinheiten mit Projektionstechniken ähnlich einem Diaprojektor oder auf Basis diffraktiver optischer Elemente (DOE) als Mustergeneratoren vorgeschlagen. Projektoren haben den Nachteil, dass die Mustererzeugung im Prinzip ein Selektionsprozess des ausgestrahlten Lichts ist, bei dem ein Zwischenbild in Form eines Dias über ein Objektiv in den Außen- oder Beobachtungsraum abgebildet wird. Dadurch ist die Lichtausbeute mit ca. 30% sehr schlecht. Dies ist besonders deshalb problematisch, weil die wegen ihrer Schmalbandigkeit und Langlebigkeit etwa gegenüber Halogenlampen bevorzugt eingesetzten Halbleiterlichtquellen ohnehin schon an sich kaum die erforderlichen optischen Ausgangsleistungen für mehr als kürzeste Reichweiten erreichen. Zusätzlich wird das Muster im Außenraum nur in einer Ebene scharf und verschwimmt davor abhängig von der Lichtstärke des Abbildungsobjektivs mehr oder weniger schnell. Da man die Entfernungen in dynamischen Szenerien nicht vorab kennt, ist es nicht möglich, eine einzige benötigte scharfe Abbildungsebene festzulegen. Schließlich ist auch der Aufwand im Hinblick auf die Optik, beispielsweise die Abbildungsobjektive, die Kondensorlinsen, Homogenisierungen und dergleichen sowie auch im Hinblick auf die Elektronik, beispielsweise die Ansteuerung der Lichtquelle oder die Kühlung, sehr hoch und eine Projektorlösung deshalb recht kostenintensiv.

Beleuchtungseinheiten auf Basis von DOEs haben zwar deutlich höhere Lichtausbeuten. Sie benötigen jedoch gut kollimiertes Laserlicht und transmittieren in nullter Ordnung immer einen Teil in der Größenordnung um 1% des einfallenden Lichts ungebeugt. Es verlässt also ein immer noch sehr starker gebündelter Strahl die Beleuchtungseinheit, und es sind keine Lösungen bekannt, diesen Strahl ohne Weiteres wieder aus dem Beleuchtungsfeld zu entfernen. Somit sind derartige Beleuchtungseinheiten entweder nicht in der Lage, Anforderungen an die Augensicherheit beziehungsweise die Laserschutzklasse zu erfüllen, und damit für den Betrieb unzulässig, oder man muss mit sehr wenig Nutzlicht auskommen, damit der ungebeugt transmittierte Strahl für die Augensicherheit unkritisch bleibt. Derart wenig Nutzlicht erlaubt aber keine Erzeugung dichter Tiefenkarten mit Stereoskopiealgorithmen über mehr als kürzeste Reichweiten.

In der US 2007-0263903 A1 erzeugt ein stereoskopisches Kamerasystem mittels einer Beleuchtungseinheit ein strukturiertes Beleuchtungsmuster, welches dann verwendet wird, um Entfernungen zu berechnen. Dabei entsteht das Muster, indem ein diffraktives optisches Element mit einem Laser beleuchtet wird. Das oben diskutierte Problem mit Augensicherheit ist hier ebenso wenig angesprochen wie sicherheitstechnische Anwendungen. Übliche Beleuchtungen dieser Art haben aber eine verhältnismäßig geringe optische Ausgangsleistung von weniger als einem Watt, und daher ist der transmittierte Strahl in der nullten Beugungsordnung weniger kritisch. Die entstehenden Helligkeiten sind in nicht sicherheitstechnischen Anwendungen auch im Allgemeinen ausreichend, weil gelegentliche Fehler in der Entfernungsberechnung oder Teilbereiche, zu denen vorübergehend keine Entfernungsdaten berechnet werden können, keine schwerwiegenden Folgen haben. Im Übrigen besteht immer die Möglichkeit, die Belichtungszeiten zu erhöhen und somit zu geringe Reichweiten der aktiven Beleuchtung auszugleichen. Das ist in der Sicherheitstechnik nicht möglich, weil in jeder sehr kurzen Ansprechperiode mehrere vollständige Tiefenkarten vorliegen müssen, um eine sichere Auswertung mit Vergleichen und Mehrfachabsicherung zu garantieren.

In der DE 10 2006 001 634 B3 ist ein Verfahren zur stereoskopischen Erstellung eines Abstandsbildes beschrieben, bei dem die Szenerie zweimal aufgenommen wird, nämlich einmal unter Aufprägen eines Zufallsmusters und ein zweites Mal unter einer veränderten Beleuchtung. Der Stereoalgorithmus basiert dann auf Bildern, in denen die Pixel nicht die Absolutwerte, sondern Helligkeitsquotienten der beiden Aufnahmen enthalten. Es werden eine Reihe von Beleuchtungen beschrieben, um das Zufallsmuster zu erzeugen, beispielsweise Masken, durchstrahlte LCD-Anzeigen oder Gitter. Keine der Beleuchtungen ermöglicht ein hinreichend intensitätsstarkes selbstunähnliches Beleuchtungsmuster, dessen Struktur auf einfache Art und Weise verändert werden kann.

Aus der DE 10 2007 036 129 B3 ist bekannt, jedem ausgewerteten Entfernungsbild zwei dreidimensionale Bilder zugrunde zu legen, die unter zwei unterschiedlichen Aufnahmebedingungen entstanden sind, beispielsweise unter Beleuchtung mit einem selbstunähnlichen oder'regelmäßigen Muster und bei abgeschalteter Beleuchtung. Die Beleuchtungseinrichtung selbst basiert in herkömmlicher Weise auf einem DOE und hat daher die oben genannten Nachteile. Sie ist weiterhin auch nicht in der Lage, die Struktur des Beleuchtungsmusters auf einfachere Weise zu variieren als beispielsweise den Austausch des DOEs.

Die WO01/051886 A1 beschreibt eine Oberflächenkonturmessung, bei der dreidimensionale Positionsinformationen über Oberflächenpunkte mittels eines Bildsensors ermittelt werden. Dazu wird die Oberfläche mit einem Interferenzmuster beleuchtet, das aus der Überlagerung zweier Lichtquellpunkte entsteht. Es werden mehrere Ausführungsformen vorgestellt, wie aus einer physikalischen Lichtquelle zwei Lichtquellpunkte erzeugbar sind, wobei in einer Ausführungsform die beiden Hauptmaxima eines Beugungsgitters durch eine Linse und einen optionalen Doppelspalt gelenkt werden.

Aus der US 2008/0106746 A1 ist ein Verfahren zur dreidimensionalen Gestenerfassung bekannt. Dafür wird ein unkorreliertes Spotmuster auf ein Objekt projiziert, beispielsweise die Hand eines Computeranwenders. Das Muster entsteht, indem Laserlicht auf ein DOE oder ein optisches Diffusorelement fällt, welches Phasenänderungen des transmittierten Lichts verursacht. Elemente dieses Muster werden in einem Referenzmuster gesucht, um auf Tiefeninformationen zu schließen, wobei das Referenzmuster vorab an einer Ebene bekannter Entfernung gewonnen wird. In anderen Ausführungsformen ist das Muster tiefenabhängig, so dass bereits aus der Struktur des Musters auf die Entfernung geschlossen werden kann.

Die DE 20 2007 010 884 U1 beschreibt eine Überwachungsvorrichtung mit Nachführung des Bildsensors, um ein gefährdendes bewegliches Maschinenteil im Sichtfeld zu halten. Dabei sind zahlreiche zwei- und dreidimensionale Bildgebungsverfahren offenbart. In einigen Ausführungsformen wird ein regelmäßiges oder selbstunähnliches Beleuchtungsmuster auf einen zu überwachenden Roboterarm gestrahlt.

In der US 4,742,237 wird eine Oberflächenanalyse mittels eines bewegten Gitters offenbart. Das Streifenmuster eines Gitters wird mittels einer Linse auf die Oberfläche projiziert. Die Linse kann als Zoomlinse ausgebildet sein, um die Abstände zwischen den hellen und dunklen Linien des Beleuchtungsmusters zu variieren.

Es ist daher Aufgabe der Erfindung, eine verbesserte Beleuchtungseinheit für die Erzeugung eines strukturierten Musters zu schaffen.

Diese Aufgabe wird durch eine Beleuchtungseinheit gemäß Anspruch 1 und ein Verfahren zur Projektion eines Beleuchtungsmusters in einen Überwachungsbereich mittels eines Mustererzeugungselements gemäß Anspruch 10 gelöst. Die erfindungsgemäße Lösung basiert auf der Grundidee, ein Lichtmuster im Nahfeld des Mustererzeugungselements abzugreifen und mit einem Abbildungsobjektiv in den Überwachungsraum zu projizieren. Haben die Projektionsobjektive eine kurze Brennweite, so ist auch der Umstand, dass die Abbildung das Muster nur in einem gewissen Tiefenschärfenbereich scharf abbildet, nicht gravierend.

Da sich im Nahfeld das Muster mit dem Abstand sehr rasch verändert, genügen schon kleine Änderungen in der Brennebene, um ein sehr verändertes Muster zu erhalten. Damit wird auch ermöglicht, zwischen verschiedenen Beleuchtungen sehr rasch und einfach umzuschalten und so die Vorteile der beiden komplementären Stereoverfahren, nämlich aktiver und passiver Stereoskopie, miteinander zu verbinden. So wird ein stabileres Detektionsverfahren und eine bessere Objektauflösung erreicht. Der Bedarf an einer zusätzlichen Kamera für Diagnose und Konfiguration entfällt, da das System selbst die Visualisierung von Szeneninformationen unterstützt. Die Beleuchtungseinheit ist flexibel ansteuerbar und kann flexible Muster erzeugen. Dabei ist sie sehr kompakt, kostengünstig und langlebig.

Als Einstellelement kommen beliebige elektrische oder mechanische Verstellmöglichkeiten in Betracht, die sowohl kontinuierlich als auch diskret arbeiten können. Obwohl bevorzugt die Einstellung im Betrieb veränderlich ist, umfasst die Erfindung auch Aufführungsformen, bei denen bereits im Rahmen der Produktion beispielsweise durch Gehäuseelemente die Brennebene in dem gewünschten Abstand fixiert wird, um später im Betrieb das vorgesehene Muster zu erzeugen. Die Lage der Brennebene muss nicht notwendig durch physische Veränderungen herbeigerufen werden, gemeint ist die effektiv wirksame Brennebene, die beispielsweise auch durch Licht anderer Wellenlänge verschoben wird.

Vorteilhafterweise ist ein Umschaltelement vorgesehen, um zumindest zwischen einer ersten Beleuchtung und einer von der ersten Beleuchtung verschiedenen zweiten Beleuchtung des Überwachungsbereichs durch Veränderung der Lage der Brennebene des Abbildungsobjektivs umzuschalten. Die Erfindung ist nicht auf zwei Beleuchtungen beschränkt, dritte und weitere Beleuchtungen sind durch jeweils andere Lage der Brennebene einstellbar. Im Zusammenhang mit einer Kamera ist denkbar, dass jedem ausgewerteten Einzelbild je eine Aufnahme unter den verschiedenen Beleuchtungen zugrunde liegt, aber auch ein Wechsel der Beleuchtung nur hin und wieder etwa zu Testzwecken, oder sogar nur auf besondere Benutzereingabe hin zur Diagnose oder Konfiguration.

Als Mustererzeugungselemente kommen solche in Betracht, die in ihrem Strahlengang eine hinreichend variable abstandsabhängige Intensitätsverteilung erzeugen. Bei einer herkömmlichen Maske oder einem Dia ist das nicht der Fall, eine Verschiebung der Brennebene führt dann lediglich zu einer Unschärfe, die sogar noch nachteilige Kontrastverluste mit sich bringt, aber keine strukturellen Änderung im Beleuchtungsmuster bewirkt. Stattdessen wird erfindungsgemäß die Kohärenz der Lichtquelle als mustererzeugend ausgenutzt. Es findet lediglich eine Umverteilung der Energie statt, keine Ausblendung, so dass ein sehr hoher Wirkungsgrad mit einer Lichtausbeute um 90% erreichbar ist.

Dabei weist das Mustererzeugungselement erfindungsgemäß ein optisches Phasenelement mit Unebenheiten auf, die dafür ausgebildet sind, lokale Phasendifferenzen zwischen benachbart auf das Phasenelement treffenden Lichtanteilen und somit das Beleuchtungsmuster durch Interferenzen zu erzeugen. Ein derartiges Phasenelement, auch als Phasenplatte oder Phasenstruktur bezeichnet, ist an das Phasenkontrastverfahren in der Mikroskopie angelehnt. Eine Oberflächenreliefstruktur wird auf mindestens eine Fläche des Phasenelements aufgebracht. Eine transmittierte Wellenfront erfährt eine Phasendifferenz zwischen Stegen und Gräben, die bei Beleuchtung mit kohärentem Licht zu einer lokalen Intensitätsmodulation führt. Diese Helligkeitsverteilung wird aus dem Nahfeld in die Bildebene, also den Überwachungsbereich projiziert.

Eine denkbare Alternative zu dem Phasenelement ist ein diffraktives optisches Element, das dann allerdings durch die Nahfeldabbildung nicht gemäß seiner Zweckbestimmung verwendet wird. Ein DOE trägt eine für ein spezielles Muster vorausberechnete Mikrostruktur, beispielsweise auf einer Fouriertransformation basierend, mit welcher der auftreffende kollimierte Laserlichtstrahl durch Beugungseffekte in Nebenordnungen "kopiert" wird. Im Fernfeld entsteht so ein determiniertes Muster, und zwar für eine Wellenlänge und ein DOE stets das gleiche Muster. Erfindungsgemäß wird das DOE gleichsam zweckentfremdet, nämlich nicht notwendig mit kollimiertem Laserlicht beleuchtet, und vor allem wird das Nahfeld abgebildet, also ehe sich das spezielle Muster des DOE überhaupt ausbilden kann. Nur durch diese Abbildung des Nahfelds ergibt sich der erfindungsgemäß gewünschte Effekt, dass das Muster veränderbar ist.

Phasenelement und DOE gleichen sich also darin, dass sich aufgrund von Unebenheiten einer Phasen- bzw. Mikrostruktur bei Beleuchtung mit kohärentem Licht im Nahfeld ein mit dem Abstand variables Muster ausbildet. Der zugrunde liegende Effekt ist aber einmal bei einem DOE Beugung und bei einem Phasenelement Interferenz, und die Strukturgrößen unterscheiden sich.

Die Unebenheiten sind vorteilhafterweise zumindest über den gesamten von der Lichtquelle beleuchteten Bereich des Mustererzeugungselements vorgesehen und/oder das Mustererzeugungselement weist keine glatten Teilbereiche auf. Damit entstehen überall im relevanten Überwachungsbereich Phasendifferenzen oder Beugungen und somit Interferenzmuster. Lücken oder kontrastschwache Bereiche werden verhindert und damit die Basis für eine flächendeckende Überwachung oder eine dichte Tiefenkarte gelegt.

Die Unebenheiten sind bevorzugt unregelmäßig und gegenüber der geometrischen Ausdehnung des Mustererzeugungselements, insbesondere dessen Dicke, sehr klein, wobei die Unebenheiten über das Mustererzeugungselement variieren und/oder wobei die Unebenheiten auf einer oder mehreren Flächen des Mustererzeugungselements vorgesehen sind. Die Unebenheiten müssen lediglich Phasendifferenzen im Bereich der Wellenlängen des verwendeten Lichts erzeugen, wofür sehr kleine Dickenunterschiede genügen. Die Unebenheiten sollten bevorzugt über das Mustererzeugungselement variieren, um lokale wie globale Regelmäßigkeiten des erzeugten Musters zu verhindern. Es genügt prinzipiell, die Phasenunterschiede bereits auf einer Fläche beziehungsweise Oberfläche des Mustererzeugungselement zu erzeugen, aber es können auch weitere Flächen Unebenheiten aufweisen, wobei diese natürlich nur optisch aktiv sind, wenn sie im Lichteinfallsbereich liegen. Es können bereits produktionsbedingte Unebenheiten genügen, indem man einen Glättungsschritt der optisch aktiven Flächen auslässt. Dann ist das Mustererzeugungselement besonders kostengünstig. Ebenso können die Unebenheiten aber auch aktiv aufgebracht werden.

Das Mustererzeugungselement weist vorteilhafterweise transmissive oder reflexive Eigenschaften auf, ist insbesondere eine Phasenplatte oder ein Phasenspiegel. Je nach gewünschtem Strahlengang und räumlichen Gegebenheiten beispielsweise innerhalb eines Gehäuses ist ein Spiegel oder eine Platte geeigneter.

Das Mustererzeugungselement weist bevorzugt Glas oder Kunststoff auf, ist insbesondere eine Glasplatte, ein Kunststoffgussteil oder eine Folie, wobei das Mustererzeugungselement nochmals bevorzugt auf mindestens einer Fläche beschichtet ist oder eine Folie aufweist, wobei Beschichtung, Folie oder deren Verbindungsbereich mit dem Mustererzeugungselement die lokale Phasendifferenzen oder Beugungen erzeugenden Unebenheiten aufweist. Diese Beschichtung oder die Folie kann eine Mikrostruktur aufweisen. Als Glasplatte oder Folie ist ein extrem kostengünstiges Mustererzeugungselement herstellbar. Die erforderlichen Unebenheiten können in diesen Materialien und bei Bedarf zusätzlich oder alternativ als Folie leicht erzeugt werden.

Das Einstellelement ist erfindungsgemäß dafür ausgebildet, die Lage der Brennebene so einzustellen, dass das Nahfeld des Mustererzeugungselements in den Überwachungsbereich projiziert wird und dort ein selbstunähnliches Muster erzeugt. Dieses Muster ist zumindest lokal, wenn nicht global selbstunähnlich, das heißt Musterstrukturen wiederholen sich frühestens in einem gewissen Abstand oder außerhalb einer Umgebung. Diese Umgebung ist im Falle der Verwendung der Beleuchtungseinheit mit einem stereoskopischen Sensor durch diejenige Umgebung vorgegeben, innerhalb derer der Stereoalgorithmus Korrespondenzen in den beiden Bildern sucht. Die Brennebene wird typischerweise auf 10-500 µm oder auch einige Millimeter bis Zentimeter hinter der Mikrostruktur eingestellt. Die Wahl der Brennebene beeinflusst Kontrast und "Verrundung" der Strukturelemente, so dass diese Eigenschaften über die Lage der Brennebene eingestellt werden können. In Grenzen kann mit der Lage der Brennebene auch die Strukturgröße des Beleuchtungsmusters im Überwachungsbereich beeinflusst werden, wobei die Strukturgröße vorteilhaft zumindest so klein gewählt wird, dass ein Musterelement höchstens so groß ist wie die gewünschte Auflösung des Sensors.

Das Einstellelement ist bevorzugt dafür ausgebildet, die Brennebene in das Mustererzeugungselement selbst, insbesondere in die Ebene einer Mikrostruktur des Mustererzeugungselements, zu verlegen und damit in dem Überwachungsbereich eine homogene Intensitätsverteilung zu erzeugen. Damit lässt sich auf einfache Weise zu einer gleichmäßigen Beleuchtung für die Erkennung natürlicher Strukturen und eine Visualisierung wechseln. Statt einer Umschaltung zwischen selbstunähnlichem Muster und homogener Beleuchtung, welche die passive Stereoskopie mit der aktiven Stereoskopie kombiniert, sind auch Wechsel zwischen zwei unterschiedlich strukturierten Mustern denkbar, um eine unterschiedliche Basis für stereoskopische Bilddaten zu schaffen und damit das Verfahren zu diversifizieren.

Das Einstellelement weist bevorzugt eine Fokussiereinrichtung des Abbildungsobjektivs und/oder eine Abstands-Einstelleinrichtung zwischen Abbildungsobjektiv und Mustererzeugungselement auf, insbesondere zur Relativverschiebung des Abbildungsobjektivs gegenüber dem Mustererzeugungselement oder zum Verschieben eines weiteren optischen Elements zwischen Mustererzeugungselement und Abbildungsobjektiv. Neben einer Fokusverstellung des Abbildungsobjektivs selbst kann, beispielsweise durch einen Piezoantrieb, die Brennebene relativ zum Nahfeld auch physisch durch Abstandsänderungen verändert werden. Es ist aber auch vorstellbar, nur den optisch wirksamen Pfad zu verändern, beispielsweise durch Einschieben einer Keilplatte, so dass das Licht bei einer Veränderung der Einstellung der Brennebene einen dickeren oder dünneren Bereich mit anderer Brechzahl durchläuft. Wichtig ist, dass die Änderung der Lage schnell und reproduzierbar erfolgt. Das ist auch durch Einsatz von Lichtquellen unterschiedlicher Wellenlänge bei einer Umschaltung erreichbar, denn die Brennebene des Abbildungsobjektivs ist wellenlängenabhängig. Nachteilig hieran ist, dass sich die Beleuchtung dann nicht mehr mit einem schmalbandigen Filter selektieren lässt, weil der Filter zumindest für die beiden gewählten Lichtquellen durchlässig sein muss.

Die Lichtquelle weist bevorzugt mindestens einen Laser auf, wobei zwischen Laser und Mustererzeugungselement eine Verteilungsoptik, welche das Laserlicht zur Ausleuchtung des Mustererzeugungselements aufweiten kann, oder eine Sammeloptik vorgesehen ist, um das Laserlicht auf das Mustererzeugungselement zu bündeln. Kohärentes und divergentes Licht, wie es in einer Verteilungsoptik entsteht, vermeidet von Anfang an mögliche Probleme mit Augenschutz. Wegen der geringen Leistungsverluste in dem Mustererzeugungselement genügen moderate Lichtleistungen, oder es sind mit Hochleistungslasern höhere Reichweiten erzielbar als herkömmlich. Die Lichtquelle ist schmalbandig, das Nutzlicht kann also leicht aus dem Umgebungslicht ausgefiltert werden.

In einer Weiterbildung der Erfindung ist eine Vielzahl von Beleuchtungseinheiten zur Ausleuchtung eines größeren Beleuchtungsbereichs oder zur Erzeugung einer größeren Beleuchtungsintensität vorgesehen, wobei sich die Beleuchtungsbereiche der einzelnen Beleuchtungseinheiten überlappend oder nichtüberlappend addieren. Die Beleuchtungseinheiten können in der einen Alternative kachelartig einen größeren Beleuchtungsbereich erzeugen. Die Anordnung hat den Vorteil, dass sich die im Überwachungsbereich deponierten Lichtenergien addieren, ohne aufgrund von Überlappungen Musterkanten abzuschwächen. Wie bei mehreren Beleuchtungseinheiten mit überlappenden Beleuchtungsfeldern sind auch Multi-Emitter-Laserdioden, welche üblicherweise für hohe Ausgangsleistungen verwendet werden, kein adäquates Mittel, weil sich dabei mehrere Muster überlagern und damit den Kontrast schwächen. Da es also nicht möglich ist, die auf den gesamten Überwachungsbereich fallende Lichtleistung beliebig zu erhöhen, ist in dieser Ausführungsform vorgesehen, die Leistungsdichte durch kleinere Beleuchtungsfelder zu erhöhen und die gewünschte Größe des Überwachungsbereichs durch mehrere Beleuchtungsmodule zu erreichen. Dabei ist denkbar, jeweils dasselbe Mustererzeugungselement von allen oder mehreren Lichtquellen auszunutzen, sofern es groß genug ist, damit die genannten störenden Effekte der Lichtquellen untereinander hinreichend unterdrückt sind. In der anderen Alternative werden identische oder nicht-zufällige Muster überlagert, so dass die erforderliche Beleuchtungsintensität erst in der gemeinsamen Überlagerung erreicht wird, um mit jeder einzelnen Beleuchtungsquelle und damit auch insgesamt die Anforderungen an den Augenschutz zu erfüllen.

Die erfindungsgemäße Beleuchtungseinrichtung wird bevorzugt in einer stereoskopischen 3D-Kamera eingesetzt, wobei eine Auswertungseinheit vorgesehen ist, welche für die Anwendung eines Stereoalgorithmus ausgebildet ist, in dem zur Erzeugung eines dreidimensionalen Entfernungsbildes einander zugehörige Teilbereiche der von den beiden Kameras der Stereokamera aufgenommenen Bilder erkannt und deren Entfernung anhand der Disparität berechnet wird. Durch den hohen Wirkungsgrad der Beleuchtungseinheit sind hohe Reichweiten möglich. Für die erfindungsgemäß ermöglichten dichten Tiefenkarten ist nicht wichtig, ob das Beleuchtungsmuster vorab bekannt ist, da es nur darauf ankommt, Strukturen desselben Beleuchtungsmuster in jeweils zeitgleich aufgenommenen Bildern der einzelnen Kameras wiederzufinden, um Korrespondenzen zu erkennen.

Dabei ist die Auswertungseinheit bevorzugt dafür ausgebildet, je ein dreidimensionales Entfernungsbild unter der ersten Beleuchtung und der zweiten Beleuchtung zu erzeugen und die entstehenden dreidimensionalen Bilddaten untereinander zu vergleichen oder miteinander zu verrechnen. Die Vorteile aktiver und passiver Stereoskopie lassen sich so wie beschrieben verbinden, und es besteht die Möglichkeit, ein diversitäres System zu schaffen.

Die 3D-Kamera ist bevorzugt als Sicherheitskamera ausgebildet, wobei die Auswertungseinheit unzulässige Eingriffe in den Überwachungsbereich erkennen und daraufhin ein Abschaltsignal erzeugen kann, und wobei ein Sicherheitsausgang vorgesehen ist, über welchen die Sicherheitskamera ein Abschaltsignal an eine überwachte Maschine ausgeben kann. Ein unzulässiger Eingriff bedeutet, dass zum einen ein Eingriff erkannt wird und zum anderen dieser Eingriff keinem zuvor eingelernten oder algorithmisch erkannten erlaubten Objekt, keiner erlaubten Bewegung oder dergleichen entspricht. Dabei ist denkbar, der Abschaltung eine Warnung vorzuschalten, also beispielsweise Schutzfelder zu definieren, in denen eine Abschaltung erfolgen soll, und vorgelagerte Warnfelder, in denen zunächst ein beispielsweise optischer oder akustischer Alarm ausgelöst wird, um den zur Abschaltung führenden Eingriff möglicherweise aufgrund der Warnung noch zu verhindern. Die Sicherheitstechnik ist besonders anspruchsvoll, und eine Sicherheitskamera kann ihre Aufgabe besser erfüllen, wenn hinreichender Kontrast im Überwachungsbereich garantiert ist und verschiedene Beleuchtungen verfügbar sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer Ausführungsform einer erfindungsgemäßen Beleuchtungseinheit in einer 3D-Sicherheits- kamera;
- Fig. 2: eine schematische Darstellung einer Ausführungsform der erfindungsge- mäßen Beleuchtungseinheit mit Abbildung des Nahfelds zur Erzeugung ei- nes strukturierten Beleuchtungsmusters;
- Fig. 3: eine Darstellung gemäß Figur 2 mit Abbildung der Ebene eines Musterer- zeugungselements zur Erzeugung einer homogenen Beleuchtung;
- Fig. 4: eine Darstellung gemäß Figur 2 zur Veranschaulichung einer Abstandsän- derung zwischen Mustererzeugungselement und Abbildungsobjektiv zur Änderung der Lage der Brennebene;
- Fig. 5: eine Darstellung gemäß Figur 4 mit einer alternativen Ausführungsform der Erfindung, bei der zur Änderung der Lage der Brennebene eine Keilplatte eingeschoben wird; und
- Fig. 6: eine Darstellung einer Anordnung mehrerer erfindungsgemäßer Beleuch- tungseinheiten zur Ausleuchtung eines größeren Überwachungsbereichs.

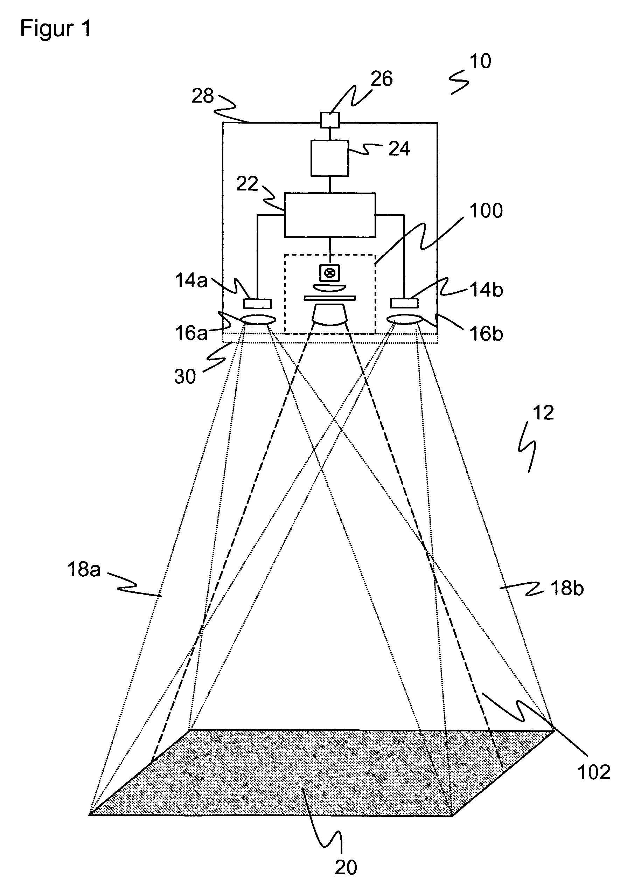

Figur 1 zeigt in einer schematischen dreidimensionalen Darstellung den allgemeinen Aufbau einer erfindungsgemäßen 3D-Sicherheitskamera 10 nach dem Stereoskopieprinzip, die zur sicherheitstechnischen Überwachung eines Raumbereichs 12 eingesetzt ist. Zwei Kameramodule sind in einem bekannten festen Abstand zueinander montiert und nehmen jeweils Bilder des Raumbereichs 12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist ein Objektiv mit einer abbildenden Optik zugeordnet, welche als Linsen 16a, 16b dargestellt sind und in der Praxis als jedes bekannte Abbildungsobjektiv realisiert sein können. Der Sichtwinkel dieser Optiken ist in Figur 1 durch gestrichelte Linien dargestellt, die jeweils eine Sichtpyramide 18a, 18b bilden.

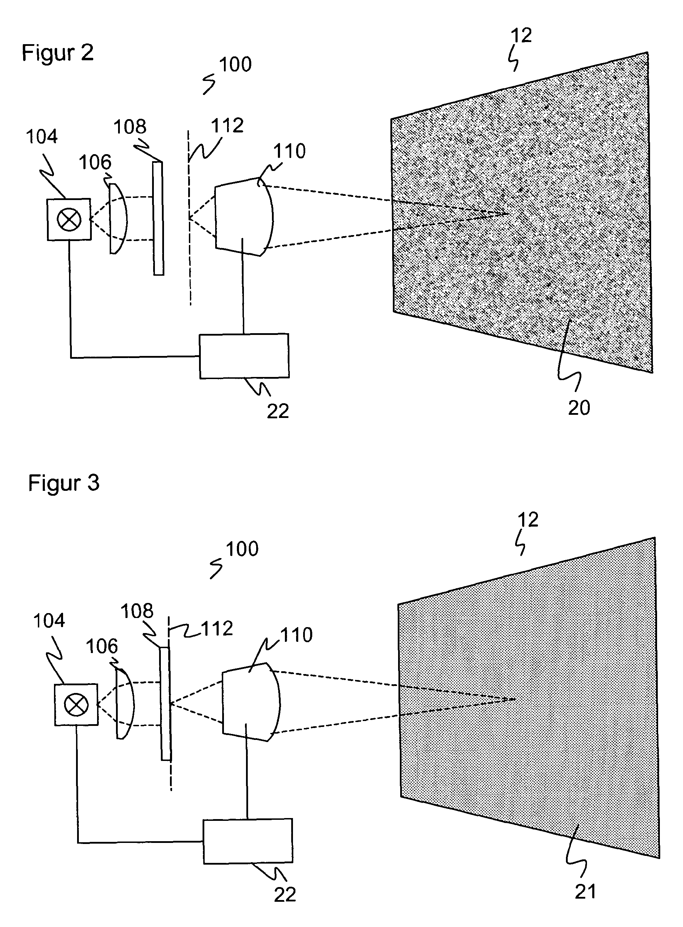

In der Mitte zwischen den beiden Bildsensoren 14a, 14b ist eine Beleuchtungseinheit 100 dargestellt, wobei diese räumliche Anordnung nur als Beispiel zu verstehen ist und die Beleuchtungseinheit ebenso asymmetrisch oder sogar außerhalb der Sicherheitskamera 3D angeordnet sein kann. Die erfindungsgemäße Beleuchtungseinheit 100 erzeugt in einem Beleuchtungsbereich 102 in dem Raumbereich 12 ein strukturiertes Beleuchtungsmuster 20 oder eine homogene Beleuchtung und wird weiter unten in verschiedenen Ausführungsformen im Zusammenhang mit den Figuren 2 bis 6 näher erläutert.

Mit den beiden Bildsensoren 14a, 14b und der Beleuchtungseinheit 100 ist eine Steuerung 22 verbunden. Mittels der Steuerung 22 wird das strukturierte Beleuchtungsmuster 20 erzeugt und bei Bedarf in seiner Struktur oder Intensität variiert, und die Steuerung 22 empfängt Bilddaten der Bildsensoren 14a, 14b. Aus diesen Bilddaten berechnet die Steuerung 22 mit Hilfe einer stereoskopischen Disparitätsschätzung dreidimensionale Bilddaten (Entfernungsbild, Tiefenkarte) des Raumbereichs 12. Das strukturierte Beleuchtungsmuster 20 sorgt dabei für einen guten Kontrast und eine eindeutig zuordenbare Struktur jedes Bildelements in dem beleuchteten Raumbereich 12. Es ist selbstunähnlich, wobei der wichtigste Aspekt der Selbstunähnlichkeit das zumindest lokale, besser globale Fehlen von Translationssymmetrien ist, so dass keine scheinbaren Verschiebungen von Bildelementen in den jeweils aus unterschiedlicher Perspektive aufgenommenen Bildern aufgrund gleicher Beleuchtungsmusterelemente erkannt werden, welche Fehler in der Disparitätsschätzung verursachen würden. Alternativ kann die Steuerung die Beleuchtungseinheit 100 so einstellen, dass eine homogene Beleuchtung entsteht, in der natürliche Strukturen für den Stereoalgorithmus und, für Diagnose- oder Konfigurationszwecke, auch für das menschliche Auge besser erkennbar sind.

Mit zwei Bildsensoren 14a, 14b tritt dabei ein bekanntes Problem auf, dass Strukturen längs der Epipolarlinie nicht für die Disparitätsschätzung herangezogen werden können, weil hier kein Triangulationswinkel auftritt oder, anders ausgedrückt, das System nicht lokal unterscheiden kann, ob die Struktur in den beiden Bildern aufgrund der Perspektive gegeneinander verschoben aufgenommen oder ob lediglich ein ununterscheidbarer anderer Teil derselben, parallel zur Basis des Stereosystems ausgerichteten Struktur verglichen wird. Um dies zu lösen, können in anderen Ausführungsformen ein oder mehrere weitere Kameramodule eingesetzt werden, welche gegenüber der Verbindungsgeraden der ursprünglichen beiden Kameramodule versetzt angeordnet sind.

Im von dem Sicherheitssensor 10 überwachten Raumbereich 12 können sich bekannte und unerwartete Objekte befinden. Dabei kann es sich beispielsweise um einen Roboterarm, eine Maschine, eine Bedienperson und anderes handeln. Der Raumbereich 12 bietet Zugang zu einer Gefahrenquelle, sei es weil es ein Zugangsbereich ist oder weil sich eine gefährliche Maschine in dem Raumbereich 12 selbst befindet. Um diese Gefahrenquelle abzusichern, können ein oder mehrere virtuelle Schutz- und Warnfelder konfiguriert werden. Aufgrund der dreidimensionalen Auswertung ist es möglich, diese Felder ebenfalls dreidimensional zu definieren, so dass eine große Flexibilität entsteht. Die Steuerung 22 wertet die dreidimensionalen Bilddaten auf unzulässige Eingriffe aus. Die Auswertungsregeln können beispielsweise vorschreiben, dass in Schutzfeldern überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 22 einen unzulässigen Eingriff in ein Schutzfeld, so wird über eine Warn- oder Abschalteinrichtung 24, die wiederum in die Steuerung 22 integriert sein kann, eine Warnung ausgegeben oder die Gefahrenquelle abgesichert, beispielsweise ein Roboterarm oder eine sonstige Maschine gestoppt. Sicherheitsrelevante Signale, also vor allem das Abschaltsignal, werden über einen Sicherheitsausgang 26 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist der Sensor 10 fehlersicher ausgelegt. Dies bedeutet unter anderem, dass der Sensor 10 sich selber in Zyklen unterhalb der geforderten Ansprechzeit testen kann, insbesondere auch Defekte der Beleuchtungseinheit 100 erkennt und somit sicherstellt, dass das Beleuchtungsmuster 20 in einer erwarteten Mindestintensität verfügbar ist, und dass der Sicherheitsausgang 26 sowie die Warn- oder Abschalteinrichtung 24 sicher, beispielsweise zweikanalig ausgelegt sind. Ebenso ist auch die Steuerung 22 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 normiert. Eine entsprechende Norm für Sicherheitskameras befindet sich in der Vorbereitung.

Die Sicherheitskamera 10 wird von einem Gehäuse 28 umgeben und geschützt. Durch eine Frontscheibe 30 kann Licht in und aus dem Raumbereich 12 hindurchtreten. Die Frontscheibe 30 hat Filtereigenschaften, welche auf die Sendefrequenz der Beleuchtungseinheit 100 abgestimmt ist. Selbst mit lichtstarken Beleuchtungseinheiten 100 kann nämlich bei ungünstigen Bedingungen, wie sehr hellen Umgebungen, großen Überwachungsvolumina oder großen Abständen von 5 Metern und mehr, das Nutzsignal im Rauschen des Gesamtspektrums nicht hinreichend detektiert werden. Mit einer Beleuchtungseinheit 100, die nur Licht in einem oder mehreren schmalen sichtbaren, ultravioletten oder infraroten Bändern aussendet, und einem darauf abgestimmten Filter 30 kann das Signal/Rauschverhältnis ganz erheblich verbessert werden, weil Umgebungslicht außerhalb dieser Bänder keine Rolle mehr spielt. Der optische Filter 30 kann auch anders realisiert sein, etwa in den Objektiven der Kameramodule.

Figur 2 zeigt eine erste Ausführungsform der erfindungsgemäßen Beleuchtungseinheit 100 auf Basis einer Nahfeldabbildung eines komplexen Interferenzmusters. Wie in der gesamten Beschreibung bezeichnen gleiche Bezugszeichen die gleichen Merkmale. Eine Lichtquelle 104 erzeugt kohärentes Licht, welches auf eine Optik 106 fällt, die hier beispielhaft als Sammellinse dargestellt ist. Damit entsteht ein begrenztes kohärentes Lichtbündel. Alternativ ist auch eine Verteilungsoptik etwa mit einer Streulinse denkbar, dann bilden Lichtquelle 104 und Optik 106 gemeinsam eine Quelle für divergentes kohärentes Licht, oder man kann auf die Optik 106 auch verzichten, wenn die Geometrie es erlaubt beziehungsweise entstehende Lichtverluste hinnehmbar sind.

Das Licht fällt auf ein Mustererzeugungselement 108, in der dargestellten Ausführungsform ein Phasenelement beziehungsweise eine Phasenplatte. Es kann sich dabei beispielsweise um eine einfache dünne Glasplatte handeln, deren eine oder beide Flächen eine leicht unebene Topologie aufweist. Die lokalen Dickenunterschiede des Glases prägen der ebenen oder schwach gekrümmten Wellenfront des einfallenden Lichts lokale Phasenverschiebungen auf. Die Ausdehnungen dieser lokalen Phasenmuster sind dabei in der Größenordnung der Lichtwellenlänge. Hinter dem Mustererzeugungselement 108 breitet sich das Lichtfeld dann ohne weitere Beeinflussung aus und bildet nach und nach ein Intensitätsmuster mit hellen Bereichen konstruktiver und dunklen Bereichen destruktiver Interferenz. Im Nahbereich wenige Millimeter hinter dem Mustererzeugungselement 108 ändert sich das Muster von zunächst völlig homogener Intensitätsverteilung über eine Intensitätsverteilung, die Ähnlichkeit mit der Oberflächenstruktur des Mustererzeugungselements 108 hat, bis hin zu einer Fernfeldverteilung, die stark strukturiert und mit weiter zunehmender Entfernung sehr stabil ist.

Das Interferenzmuster ist bei guter räumlicher Kohärenz der Lichtquelle 104 und geeigneter Oberflächenstruktur des Mustererzeugungselements 108 stark durchmoduliert, so dass ein flächendeckendes Interferenzmuster von gut sichtbaren und selbstunähnlichen Hell-Dunkel-Übergängen entsteht. Die gute Kohärenz führt zu starken Kontrasten des Musters und nur geringem homogenem Hintergrundlicht. Bei schlechter Kohärenz oder überlappenden unabhängigen Mustern, etwa wegen mehrerer Lichtquellpunkte, wird der Kontrast deutlich abgeschwächt. Der Stereoalgorithmus kann davon beeinträchtigt werden, und die Sicherheitskamera 10 ist weniger robust gegenüber Fremdlicht.

Ein Abbildungsobjektiv 110, welches in jeder bekannten Weise, beispielsweise als einfache Sammellinse oder wie ein Diaprojektor ausgestaltet sein kann, bildet mit einer Brennebene 112 das Nahfeld mit dem Interferenzmuster hinter dem Mustererzeugungselement in den Überwachungsbereich 12 ab, so dass dort das selbstunähnliche Beleuchtungsmuster 20 projiziert wird. Das Interferenzmuster bildet sich im Nahfeld unmittelbar hinter dem Mustererzeugungselement 108 erst aus, variiert also mit dem Abstand zu dem Mustererzeugungselement 108. Die Lage der Brennebene 112 beeinflusst deshalb die Struktur des entstehenden Beleuchtungsmusters 20.

Zusätzlich zu dem Abbildungsobjektiv 110 kann ein Element zur Änderung des natürlichen Beleuchtungsfelds der Beleuchtungseinrichtung 100 und der Lichtquelle 104 vorgesehen sein, beispielsweise eine Zylinderlinse, oder eine Blende zur Begrenzung des Beleuchtungsfeldes. Derartige Elemente können justiert werden, um das gewünschte Beleuchtungsfeld zu erreichen.

Statt eines Phasenelements kann auch ein DOE als Mustererzeugungselement 108 eingesetzt werden. Dieses DOE wird dann, wie einleitend schon erläutert, zweckentfremdet eingesetzt, da das Nahfeld abgebildet wird, ehe sich das dedizierte Muster des DOE im Fernfeld ausbilden kann. Weiterhin erfolgt auch die Beleuchtung nicht wie üblich mit einem stark gebündelten Lichtstrahl, weil das Licht der Lichtquelle 104 in der Optik 106 zu einem divergenten Lichtbündel aufgeweitet oder zumindest auf einen größeren Bereich abgebildet wird. Dadurch gibt es keine Probleme mit dem Augenschutz.

Die kohärente Lichtquelle 104 ist bevorzugt eine Laserdiode, nochmals bevorzugt ein Single-Emitter-Laser, weil mehrere Quellpunkte weitere Interferenzquellen bilden und damit Kontrastverluste in dem Muster verursachen könnten. Wegen der hohen Lichtausbeute in dem Phasenelement 108 genügen vergleichsweise moderate Ausgangsleistungen, jedoch können besonders für größere Reichweiten auch die stärksten verfügbaren Hochleistungslaser eingesetzt werden.

Das Mustererzeugungselement 108 zeigt Unebenheiten zumindest über diejenigen Bereiche, in denen das strukturierte Beleuchtungsmuster 20 entstehen soll. Glatte Teilbereiche verhindern Interferenzen und sorgen damit für musterfreie Stellen, die zumindest in den meisten Anwendungen unerwünscht sind, weil sie zu Lücken in den Tiefenkarten führen können. Eine einfache Realisierung ist, dass die Unebenheiten einseitig oder beidseitig über die gesamte Oberfläche des Phasenelements 108 ausgebildet sind, oder zumindest über die optisch aktive Oberfläche. Die Unebenheiten sollten weiterhin unregelmäßig sein, weil sonst untereinander ähnliche Interferenzstrukturen im Beleuchtungsmuster 20 entstehen könnten.

Das Phasenelement 108 kann außer aus Glas auch aus einem anderen transparenten Material gefertigt sein, etwa Kunststoff aufweisen oder als Folie ausgebildet sein. Die Unebenheiten können bereits lediglich die Fertigungstoleranzen nicht geglätteter Oberflächen sein, oder sie werden eigens aufgebracht. Beschichtungen oder Beschichtungsfolien können so aufgebracht werden, dass gerade in gewöhnlichen optischen Anwendungen als unzureichend genau betrachtete unebene Verbindungen für die notwendigen Unebenheiten sorgt. Auch eine Beschichtung mit entsprechenden Unebenheiten ist denkbar, sogar in Form von Mikrostrukturen. Besonders letzteres ist aber ein recht hoher Zusatzaufwand, und das Phasenelement 108 zeigt die gewünschten Effekte auch bei viel einfacher hervorgerufenen Unebenheiten. Kunststoffteile mit beliebigen gewünschten Unebenheiten können beispielsweise durch Spritzgussverfahren hergestellt werden.

Die Mustereigenschaften können genauer festgelegt werden, indem die Oberflächenstruktur des Phasenelements präzise vorgegeben wird. Beispielsweise können definierte Strukturen in Simulationsrechnungen ermittelt und dann mittels Laserlitographie erzeugt werden. Die so erzeugte Struktur kann durch Prägen, Abformen mit optischen Polymeren oder durch Präzisionsspritzguss repliziert werden.

Der Füllfaktor der beleuchteten Fläche des Phasenelements 108, also der Anteil an Strukturelementen, sollte für einen guten Kontrast und Wirkungsgrad etwa bei 50% oder darüber liegen. Die Strukturelemente selbst sind bevorzugt anisotrop, um im Beleuchtungsmuster 20 Isotropien und damit die Gefahr von Mehrdeutigkeiten zu begrenzen. Die Strukturelemente können außerdem so ausgebildet werden, dass die optische Leistung in einer vorgegebenen oder optimalen Weise über den Beleuchtungsbereich 102 verteilt wird, beispielsweise eine Randabdunkelung etwa gegeben durch die Geometrien oder Objektiveinflüsse kompensieren.

Die Brennebene des Abbildungsobjektivs 110 ist verstellbar. In der Ausführungsform gemäß Figur 2 ist die Steuerung dafür mit einer elektrischen Fokusverstellung des Abbildungsobjektivs 110 verbunden. Damit lässt sich Struktur und Kontrast des Beleuchtungsmusters 20 durch Variation der Lage der Brennebene 112 verändern. Die Lage der Brennebene 112 ist nicht maßstabsgerecht, in der Praxis kann das selbstunähnliche Muster schon direkt hinter dem Mustererzeugungselement 108 abgegriffen werden.

Figur 3 zeigt eine Situation, in der die Brennebene 112 in die Ebene der Mikrostruktur des Mustererzeugungselements 108 gelegt ist. An dieser Stelle sind noch keine Interferenzen wirksam, und deshalb entsteht in dem Raumbereich 12 eine homogene Beleuchtung 21. Es kann natürlich auch eine Brennebene 112 noch weiter vorne, also innerhalb des Mustererzeugungselements 108 oder vor dem Mustererzeugungselement 108 gewählt werden. Die Umschaltung zwischen selbstunähnlichem Muster und homogener Beleuchtung erreicht die Steuerung 22 deshalb allein durch eine Verschiebung der Brennebene.

Damit ist eine besonders unaufwändige und schnelle Umschaltung zwischen verschiedenen Beleuchtungen beziehungsweise Beleuchtungsszenarien möglich. Dies kann auf vielfältige Weise ausgenutzt werden, beispielsweise um eine gewünschte Strukturgröße für das Beleuchtungsmuster einzustellen, um zur Diversifizierung mehrere selbstunähnliche Muster einzusetzen oder um passive und aktive Stereoskopie durch Wechsel zwischen homogener Beleuchtung und selbstunähnlichem Beleuchtungsmuster vorteilhaft zu kombinieren.

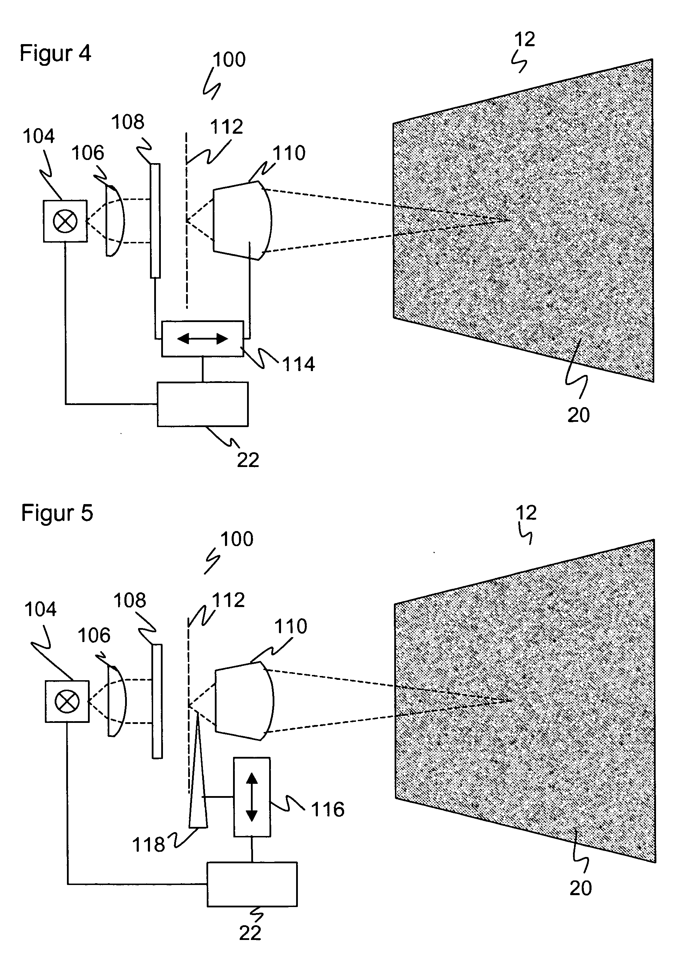

In Figur 4 ist ein zusätzliches Verstellelement 114 vorgesehen, um den Relativabstand zwischen Mustererzeugungselement 108 und Abbildungsobjektiv 110 zu verändern. Das Verstellelement 114 kann beispielsweise über piezo-elektrische Kristalle realisiert sein. Damit ändert sich zwar nicht die Fokuseinstellung des Abbildungsobjektivs 110, sehr wohl aber die relative Lage der Brennebene 112 gegenüber dem Mustererzeugungselement 108. Analog zu den Figuren 2 und 3 kann über das Verstellelement 14 zwischen einer Position mit homogener Beleuchtung 21 und verschiedenen Beleuchtungsmustern 20 gewechselt werden.

Eine weitere Möglichkeit, die relative Lage der Brennebene 112 zu verändern, ist in Figur 5 dargestellt. Ein Verstellelement 116 schiebt ein optisches Element, hier eine transparente Keilplatte 118, weiter in den optischen Pfad zwischen Mustererzeugungselement 108 und Abbildungsobjektiv 110 hinein oder weiter aus dem optischen Pfad heraus. Damit wird der Lichtweg verlängert oder verkürzt, was effektiv wiederum dazu führt, dass das Nahfeld aus einem anderen Abstand zu dem Mustererzeugungselement 108 abgebildet wird. Anstelle eine Keilplatte eignet sich jedes optische Element, das abhängig von seiner Lage im optischen Pfad die Länge des Lichtwegs verändert.

Es sind weitere Möglichkeiten denkbar, die relative Lage der effektiv wirksamen Brennebene zu verändern, also eine anders beabstandete Ebene des Nahfelds abzubilden. Neben beliebigen Kombinationen der beschriebenen Ausgestaltungen ist beispielsweise auch denkbar, zwischen Lichtquellen unterschiedlicher Wellenlänge hin-und herzuschalten. Wichtig ist die Geschwindigkeit und genaue Reproduzierbarkeit der Ansteuerung einer gewünschten relativen Lage der Brennebene 112.

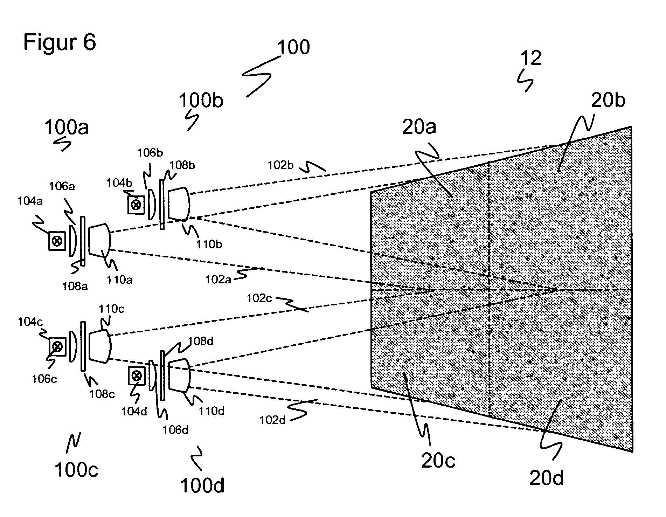

Figur 6 zeigt eine Mehrfachanordnung von Beleuchtmodulen 100a-d, die in ihrer Gesamtheit die Beleuchtungseinheit 100 bilden und ihre strukturierten Beleuchtungsmuster 20a-d oder analog ihre homogenen Beleuchtungen 21 zu einem größeren Beleuchtungsmuster 20 beziehungsweise einem größeren homogenen Beleuchtungsbereich addieren. Dies sollte bevorzugt überlappungsfrei geschehen, da übereinander geblendete Beleuchtungsmuster 20a-d zu Kontrastabschwächungen führen.

Jedes einzelne Beleuchtungsmodul 100a-d weist jeweils eine kohärente Lichtquelle 104a-d, eine optionale Optik 106a-d zur Strahlformung bei Auftreffen auf ein Mustererzeugungselement 108a-d sowie eine Abbildungsoptik 110a-d auf. Da jedem Teilbereich 20a-d jeweils die Leistung einer eigenen Lichtquelle 104a-d zur Verfügung steht, ist die Gesamtenergie in dem Beleuchtungsmuster 20 gegenüber einer einzigen baugleichen Lichtquelle 104 erhöht. Somit können höhere Leistungen, also insbesondere höhere Reichweiten erzielt werden, oder man kommt mit kostengünstigeren und einfacheren Lichtquellen geringerer Ausgangsleistung aus. Schließlich vereinfacht die Verteilung der Lichtleistung auf mehrere Quellen etwaige Probleme mit Augenschutzgrenzen noch weiter.

Für jedes Einzelmodul 100a-d kann eine der früher einzeln beschriebenen Ausführungsformen verwendet werden, auch in Mischformen. Denkbar ist auch, Elemente der Einzelmodulen 100a-d mehrfach zu verwenden, beispielsweise das Mustererzeugungselement 108. Dabei ist in Kauf zu nehmen oder durch entsprechende Anordnung und Dimensionierung zu verhindern, dass die Interferenzen der mehreren Lichtquellen 104a-d zu den Kontrast beeinträchtigenden störenden Überlagerungen der einzelnen Muster 20a-d führen.

Insgesamt wird damit ein Beleuchtungskonzept vorgestellt, welches für einen Kamerasensor auf Basis stereoskopischer Bilder die sichere und vollständige Erfassung der dreidimensionalen Szenerie erlaubt. Das Beleuchtungskonzept bietet eine sehr schnelle Umschaltung zwischen einer kontrastreichen Musterstruktur, welche projizierte Bildmerkmale für aktive Stereoskopie zur Verfügung stellt, und einer gleichförmigen Beleuchtungsintensität zur Ausnutzung natürlicher Szenenkontraste für die Detektion. Unter homogener Beleuchtung ist auch eine gute visuelle Orientierung möglich, für die in einem rein aktiven System mit künstlicher Struktur eine zusätzliche Kamera benötigt würde.

Eine Umschaltung müsste herkömmlich durch zwei verschiedene Lichtquellen realisiert werden, beispielsweise eine Kontrastmusterbeleuchtung und eine homogene Beleuchtung. Sie könnten auch, etwa über einen Teilerspiegel, das selbe Abbildungsobjektiv nutzen, um den Beleuchtungsbereich zu wählen. Dennoch wäre ein wesentlich höherer Materialaufwand erforderlich.

## Patentansprüche

1. Beleuchtungseinheit (100) mit einer Lichtquelle (104) und einem im Strahlengang der Lichtquelle (104) angeordneten optischen Mustererzeugungselement (108) zur Projektion eines Beleuchtungsmusters (20, 21) in einen Überwachungsbereich (12),
wobei dem Mustererzeugungselement (108) ein Abbildungsobjektiv (110) nachgeordnet ist und wobei ein Einstellelement (22, 110, 114, 116, 118) vorgesehen ist, mittels dessen das Beleuchtungsmuster (20, 21) durch Einstellung der relativen Lage der Brennebene (112) des Abbildungsobjektivs (110) veränderbar ist,
**dadurch gekennzeichnet,**
**dass** das Mustererzeugungselement (108) ein optisches Phasenelement mit Unebenheiten aufweist, die dafür ausgebildet sind, lokale Phasendifferenzen zwischen benachbart auf das Phasenelement treffenden Lichtanteilen und somit das Beleuchtungsmuster (20) durch Interferenzen zu erzeugen und dass das Einstellelement (22, 110, 114, 116, 118) dafür ausgebildet ist, die relative Lage (112) der Brennebene des Abbildungsobjektius (110) so einzustellen, dass das Nahfeld des Mustererzeugungselement (108) in den Überwachungsbereich (12) projiziert wird und dort ein selbstunähnliches Muster (20) erzeugt und durch Einstellung der relativen Lage der Brennebene (112) des Abbildungsobjektius (110) die Struktur des Beleuchtungsmusters (20, 21) veränderbar ist.

2. Beleuchtungseinheit (100) nach Anspruch 1,
wobei ein Umschaltelement (22) vorgesehen ist, um zumindest zwischen einer ersten Beleuchtung (20) und einer von der ersten Beleuchtung verschiedenen zweiten Beleuchtung (21) des Überwachungsbereichs (12) durch Veränderung der relative Lage der Brennebene (112) des Abbildungsobjektivs (110) umzuschalten.

3. Beleuchtungseinheit (100) nach Anspruch 1 oder 2,
wobei das Einstellelement (22, 110, 114, 116, 118) dafür ausgebildet ist, die Brennebene (112) in das Mustererzeugungselement (108) selbst, insbesondere in die Ebene einer Mikrostruktur des Mustererzeugungselements (108), zu verlegen und damit in dem Überwachungsbereich (12) eine homogene Intensitätsverteilung (21) zu erzeugen.

4. Beleuchtungseinheit (100) nach einem der vorhergehenden Ansprüche,
wobei das Einstellelement (22, 110, 114, 116, 118) eine Fokussiereinrichtung des Abbildungsobjektivs (110) und/oder eine Abstands-Einstelleinrichtung (114, 116) zwischen Abbildungsobjektiv (110) und Mustererzeugungselement (108) aufweist, insbesondere zur Relativverschiebung des Abbildungsobjektivs (110) gegenüber dem Mustererzeugungselement (108) oder zum Verschieben eines weiteren optischen Elements (118) zwischen Mustererzeugungselement (108) und Abbildungsobjektiv (110).

5. Beleuchtungseinheit (100) nach einem der vorhergehenden Ansprüche,
wobei die Lichtquelle (104) mindestens einen Laser aufweist und wobei zwischen Laser und Mustererzeugungselement (108) eine Verteilungsoptik, welche das Laserlicht zur Ausleuchtung des Mustererzeugungselements (108) aufweiten kann, oder eine Sammeloptik (106) vorgesehen ist, um das Laserlicht auf das Mustererzeugungselement (108) zu bündeln.

6. Anordnung einer Vielzahl von Beleuchtungseinheiten (100a-d) nach einem der Ansprüche 1 bis 5 zur Ausleuchtung eines größeren Überwachungsbereichs (12) oder zur Erzeugung einer größeren Beleuchtungsintensität, wobei sich die Beleuchtungsbereiche (20a-d) der einzelnen Beleuchtungseinheiten (100a-d) überlappend oder nichtüberlappend addieren.

7. Stereoskopische 3D-Kamera (10) mit mindestens einer Beleuchtungseinheit (100) nach einem der Ansprüche 1 bis 6, wobei eine Auswertungseinheit (22) vorgesehen ist, welche für die Anwendung eines Stereoalgorithmus ausgebildet ist, in dem zur Erzeugung eines dreidimensionalen Entfernungsbildes einander zugehörige Teilbereiche der von den beiden Kameras (14a-b, 16a-b) der Stereokamera (10) aufgenommenen Bilder erkannt und deren Entfernung anhand der Disparität berechnet wird.

8. Stereoskopische 3D-Kamera (10) nach Anspruch 7,
wobei die Auswertungseinheit (22) dafür ausgebildet ist, je ein dreidimensionales Entfernungsbild unter der ersten Beleuchtung (20) und der zweiten Beleuchtung (21) zu erzeugen und die entstehenden dreidimensionalen Bilddaten untereinander zu vergleichen oder miteinander zu verrechnen.

9. Stereoskopische 3D-Kamera (10) nach Anspruch 7 oder 8,
die als Sicherheitskamera ausgebildet ist, wobei die Auswertungseinheit (22) unzulässige Eingriffe in den Überwachungsbereich (12) erkennen und daraufhin ein Abschaltsignal erzeugen kann, und wobei ein Sicherheitsausgang (26) vorgesehen ist, über welchen die Sicherheitskamera ein Abschaltsignal an eine überwachte Maschine ausgeben kann.

10. Verfahren zur Projektion eines Beleuchtungsmusters (20, 21) in einen Überwachungsbereich (12) mittels eines Mustererzeugungselements (108),
wobei das Beleuchtungsmuster (20) durch Interferenzen erzeugt wird, indem divergentes kohärentes Licht auf ein Phasenelement des Mustererzeugungselements (108) eingestrahlt wird und Unebenheiten des Phasenelements (108) lokale Phasendifferenzen zwischen benachbart auf das Phasenelement treffenden Lichtanteilen erzeugen und wobei in einer ersten selbstunähnlichen Beleuchtung (20) das Nahfeld des Mustererzeugungselements (108) durch ein Abbildungsobjektiv (110) in den Überwachungsraum (12) abgebildet wird, dort ein selbstunähnliches Muster (20) erzeugt und die Struktur des Beleuchtungsmusters (20, 21) durch die relative Lage der Brennebene (112) des Abbildungsobjektivs (110) eingestellt wird.

11. Verfahren nach Anspruch 10,
wobei zwischen zumindest einer ersten selbstunähnlichen Beleuchtung (20) und zweiten homogenen Beleuchtung (21) umgeschaltet wird, indem für die erste Beleuchtung (20) die Brennebene (112) des Abbildungsobjektivs (110) so eingestellt wird, dass das Nahfeld des Mustererzeugungselements (108) in den Überwachungsbereich (12) projiziert wird und für die zweite Beleuchtung (21) die Brennebene (112) des Abbildungsobjektivs (110) auf das Mustererzeugungselement (108) selbst, insbesondere in die Ebene einer Mikrostruktur des Mustererzeugungselements (108) eingestellt wird.

12. Stereoskopisches Bilderfassungsverfahren zur sicheren Überwachung eines Raumbereichs (12) mit Hilfe einer von einer Stereokamera (10) erzeugten dichten Tiefenkarte einer Szenerie in einem Überwachungsbereich (12), bei dem der Überwachungsbereich (12) mit einem Verfahren nach Anspruch 11 beleuchtet wird, wobei zur Erzeugung der Tiefenkarte einander zugehörige Teilbereiche der von den beiden Kameras (14a-b, 16a-b) der Stereokamera (10) aufgenommenen Bilder erkannt und deren Abstand anhand der Disparität berechnet wird und wobei je ein dreidimensionalen Entfernungsbild unter der ersten Beleuchtung (20) und der zweiten Beleuchtung (21) erzeugt und die entstehenden dreidimensionalen Bilddaten zur Erzeugung der Tiefenkarte untereinander verglichen oder miteinander verrechnet werden, wobei die Tiefenkarte auf unzulässige Eingriffe ausgewertet und, wenn ein unzulässiger Eingriff erkannt wird, über einen Sicherheitsausgang (26) ein Abschaltsignal an eine Gefahrenquelle ausgegeben wird.

## Claims

1. An illumination unit (100) having a light source (104) and having an optical pattern generating element (108) arranged in the beam path of the light source (104) for projecting an illumination pattern (20, 21) into a monitored zone (12),
wherein an imaging objective (110) is disposed after the pattern generation element (108) and wherein an adjustment element (22, 110, 114, 116, 118) is provided by means of which the illumination pattern (20, 21) can be varied by setting the relative position of the focal plane (112) of the imaging objective (110),
**characterized in that**
the pattern generating element (108) has an optical phase element with irregularities which are designed to generate local phase differences between light portions incident in an adjacent manner onto the phase element and thus to generate the illumination pattern (20) by interference; and **in that** the setting element (22, 110, 114, 116, 118) is designed to set the relative position (112) of the focal plane of the imaging lens (110) so that the near field of the pattern generation element (108) is projected into the monitored zone (12) and generates an irregular pattern (20) and the structure of the illumination pattern (20, 21) can be varied by setting the relative position of the focal plane (112) of the imaging objective (110).

2. An illumination unit (100) in accordance with claim 1,
wherein a switchover element (22) is provided to switch over between at least a first illumination (20) and a second illumination (21) of the monitored zone (12) different from the first illumination by varying the relative position of the focal plane (112) of the imaging objective (110).

3. An illumination unit (100) in accordance with claim 1 or claim 2, wherein the setting element (22, 110, 114, 116, 118) is designed to relocate the focal plane (112) into the pattern generation element (108) itself, in particular into the plane of a microstructure of the pattern generation element (108) and thus to generate a homogeneous intensity distribution (21) in the monitored zone (12).

4. An illumination unit (100) in accordance with any one of the preceding claims,
wherein the setting element (22, 110, 114, 116, 118) has a focusing device of the imaging objective (110) and/or a spacing setting device (114, 116) between the imaging objective (110) and the pattern generation element (108), in particular for the relative displacement of the imaging objective (110) with respect to the pattern generation element (108) or for displacing a further optical element (118) between the pattern generation element (108) and the imaging objective (110).

5. An illumination unit (100) in accordance with any one of the preceding claims,
wherein the light source (104) has at least one laser and wherein an optical distribution system which can expand the laser light for illuminating the pattern generation element (108) is provided between the laser and the pattern generating element (108) or an optical converging system (106) is provided to bundle the laser light onto the pattern generation element (108).

6. An arrangement of a plurality of illumination units (100a-d) in accordance with any one of the claims 1 to 5 for illuminating a larger monitored zone (12) or for generating a larger illumination intensity, wherein the illumination regions (20a-d) of the individual illumination units (100a-d) are added in an overlapping or nonoverlapping manner.

7. A stereoscopic 3D camera (10) having at least one illumination unit in accordance with any one of the claims 1 to 6, wherein an evaluation unit (22) is provided which is designed for the use of a stereo algorithm in which partial regions of the images associated with one another and taken by the two cameras (14a-b, 16a-b) of the stereoscopic camera (10) are recognized and their distance is calculated with reference to the disparity for generating a three-dimensional distance image.

8. A stereoscopic 3D camera (10) in accordance with claim 7,
wherein the evaluation unit (22) is designed to generate a three-dimensional distance image beneath the first illumination (20) and the second illumination (21) and to compare the arising three-dimensional image data with one another or to offset them against one another.

9. A stereoscopic 3D camera (10) in accordance with claim 7 or claim 8,
which is designed as a safety camera, wherein the evaluation unit (22) is able to recognize unauthorized intrusions into the monitored zone and can thereupon generate a switch-off signal, and wherein a safety output (26) is provided via which the safety camera can output a switch-off signal to a monitored machine.

10. A method for projecting an illumination pattern (20, 21) into a monitored zone (12) by means of a pattern generation element (108),
wherein the illumination pattern (20) is generated by interference in that divergent coherent light is irradiated onto a phase element of the pattern generation element (108) and irregularities of the phase element (108) generate local phase differences between light portions incident in an adjacent manner onto the phase element and wherein the near field of the pattern generation element (108) is imaged in a first irregular illumination (20) into the monitored zone (12) by an imaging objective (110), an irregular pattern (20) is generated there and the structure of the illumination pattern (20, 21) is set by the relative position of the focal plane (112) of the imaging objective (110).

11. A method in accordance with claim 10,
wherein a switchover is carried out between at least a first irregular illumination (20) and a second homogeneous illumination (21) in that the focal plane (112) of the imaging objective (110) is set for the first illumination (20) so that the near field of the pattern generation element (108) is projected into the monitored zone (12) and the focal plane (112) of the imaging objective (110) is set for the second illumination (21) onto the pattern generation element (108) itself and is in particular set into the plane of a microstructure of the pattern generation element (108).

12. A stereoscopic image detection method for the secure monitoring of a spatial zone (12) with the aid of a dense depth map of a scenery in a monitored zone (12) generated by a stereoscopic camera (10), wherein the monitored zone (12) is illuminated using a method in accordance with claim 11, wherein mutually associated part regions of the images taken by the two cameras (14a-b, 16a-b) of the stereoscopic camera (10) are recognized for generating the depth map and their spacing is calculated with reference to the disparity, and wherein a respective three-dimensional distance image is generated beneath the first illumination (20) and the second illumination (21) and the arising three-dimensional image data are compared with one another or offset against one another for generating the depth map, with the depth map being evaluated for unauthorized intrusions and, if an unauthorized intrusion is recognized, a switch-off signal being output to a danger source via a safety output (26).

## Revendications

1. Unité d'éclairage (100) avec une source de lumière (104) et un élément optique de génération de motif (108) agencé dans le trajet des rayons de la source de lumière (104) pour la projection d'un motif d'éclairage (20, 21) dans une zone de surveillance (12),
dans laquelle un objectif d'imagerie (110) est agencé à la suite de l'élément de génération de motif (108) et dans laquelle un élément de réglage (22, 110, 114, 116, 118) est prévu, au moyen duquel le motif d'éclairage (20, 21) peut être modifié par réglage de la position relative du plan focal (112) de l'objectif d'imagerie (110),
**caractérisée en ce que**
l'élément de génération de motif (108) est un élément de phase optique avec des inégalités, qui sont réalisées pour engendrer des différences de phase locales entre des parts de lumière tombant au voisinage sur l'élément de phase et ainsi le motif d'éclairage (20) par interférences, et **en ce que** l'élément de réglage (22, 110, 114, 116, 118) est réalisé pour régler la position relative (112) du plan focal de l'objectif d'imagerie (110) de telle manière que le champ proche de l'élément de génération de motif (108) est projeté dans la zone de surveillance (12) et engendre dans celle-ci un motif (20) dissemblable à lui-même, et par réglage de la position relative du plan focal (112) de l'objectif d'imagerie (110), la structure du motif d'éclairage (20, 21) est modifiable.

2. Unité d'éclairage (100) selon la revendication 1,
dans laquelle il est prévu un élément de commutation (22) afin de commuter au moins entre un premier éclairage (20) et un second éclairage (21), différent du premier éclairage, de la zone de surveillance (12) par modification de la position relative du plan focal (112) de l'objectif d'imagerie (110).

3. Unité d'éclairage (100) selon la revendication 1 ou 2,
dans laquelle l'élément de réglage (22, 110, 114, 116, 118) est réalisé pour déplacer le plan focal (112) jusque dans l'élément de génération de motif (108) lui-même, en particulier jusque dans le plan d'une microstructure de l'élément de génération de motif (108), et ainsi pour
engendrer une répartition homogène d'intensité (21) dans la zone de surveillance (12).

4. Unité d'éclairage (100) selon l'une des revendications précédentes, dans laquelle l'élément de réglage (22, 110, 114, 116, 118) comprend un dispositif de focalisation de l'objectif d'imagerie (110) et/ou un dispositif de réglage de distance (114, 116) entre l'objectif d'imagerie (110) et l'élément de génération de motif (108), en particulier pour le déplacement relatif de l'objectif d'imagerie (110) par rapport à l'élément de génération de motif (108) ou pour le déplacement d'un autre élément optique (118) entre l'élément de génération de motif (108) et l'objectif d'imagerie (110).

5. Unité d'éclairage (100) selon l'une des revendications précédentes, dans laquelle la source de lumière (104) comprend au moins un laser et dans laquelle une optique de répartition, qui est capable d'élargir la lumière laser pour l'illumination de l'élément de génération de motif (108), entre le laser est l'élément de génération de motif (108), ou dans laquelle il est prévu une optique convergente (106) pour focaliser la lumière laser sur l'élément de génération de motif (108).

6. Agencement d'une pluralité d'unités d'éclairage (100a-d) selon l'une des revendications 1 à 5 pour l'illumination d'une zone de surveillance (12) de plus grande taille ou pour la génération d'une intensité d'éclairage plus forte, dans lequel les zones d'éclairage (20a-d) les unités d'éclairage individuelles (100a-d) s'ajoute en se chevauchant ou sans se chevaucher.

7. Caméra stéréoscopique 3D (10) comprenant au moins une unité d'éclairage (100) selon l'une des revendications 1 à 6, dans laquelle il est prévu une unité d'évaluation (22) qui est réalisée pour l'application d'un algorithme stéréo dans lequel, pour générer une image de distance tridimensionnelle, des zones partielles mutuellement associées des images prises par les deux caméras (14a-b, 16a-b) de la caméra stéréo (10) sont reconnues et leur éloignement est calculé à l'aide de la disparité.

8. Caméra stéréoscopique 3D (10) selon la revendication 7,
dans laquelle l'unité d'évaluation (22) est réalisée pour réaliser respectivement une image d'éloignement tridimensionnelle sous le premier éclairage (20) et sous le second éclairage (21), et pour comparer les données image tridimensionnelles résultantes l'une par rapport à l'autre ou les compenser l'une à l'autre par calcul.

9. Caméra stéréoscopique 3D (10) selon la revendication 7 ou 8,
qui est réalisée comme caméra de sécurité, dans laquelle l'unité d'évaluation (22) est capable de reconnaître des interventions inadmissibles dans la zone de surveillance (12) et de générer ensuite un signal de coupure, et dans laquelle il est prévu une sortie de sécurité (26) via laquelle la caméra de sécurité peut délivrer un signal de coupure à une machine surveillée.

10. Procédé pour la projection d'un motif d'éclairage (20, 21) dans une zone de surveillance (12) au moyen d'un élément de génération de motif (108),
dans lequel le motif d'éclairage (20) et engendré par interférence, en ce qu'une lumière cohérente divergente est projetée sur un élément de phase de l'élément de génération de motif (108), et des inégalités de l'élément de phase (108) provoquent des différences de phase entre des parts de lumière tombant au voisinage sur l'élément de phase, et dans lequel, dans un premier éclairage (20) dissemblable à lui-même, le champ proche de l'élément de génération de motif (108) est mis en image par un objectif d'imagerie (110) dans la zone de surveillance (12), engendre dans celui-ci un motif (20) dissemblable à lui-même, et la structure du motif d'éclairage (20, 21) est réglée par la position relative du plan focal (112) de l'objectif d'imagerie (110).

11. Procédé selon la revendication 10,
dans lequel on procède à une commutation entre au moins premier éclairage dissemblable à lui-même (20) et un second éclairage homogène (21), en ce que l'on règle, pour le premier éclairage (20), le plan focal (112) de l'objectif d'imagerie (110) de telle manière que le
champ proche de l'élément de génération de motif (108) est projeté dans la zone de surveillance (12) et, pour le second éclairage (21), le plan focal (112) de l'objectif d'imagerie (110) est réglé sur l'élément de génération de motif (108) lui-même, en particulier dans le plan d'une microstructure de l'élément de génération de motif (108).

12. Procédé de prise d'images stéréoscopiques pour la surveillance de sécurité d'une zone spatiale (12) à l'aide d'une carte de profondeur dense engendrée par une caméra stéréo (10) d'une scène dans une zone de surveillance (12), dans lequel la zone de surveillance (12) est éclairée avec un procédé selon la revendication 11, et pour engendrer la carte de profondeur, on reconnaît des zones partielles mutuellement associées des images prises par les deux caméras (14a-b, 16a-b) de la caméra stéréo (10) et l'on calcule leur distance à l'aide de la disparité, et dans lequel on engendre respectivement une image de distance tridimensionnelle sous le premier éclairage (20) et sous le second éclairage (21), et les données image tridimensionnelles résultantes sont comparées l'une à l'autre pour engendrer la carte de profondeur ou compensées l'une à l'autre par calcul, et la carte de profondeur est évaluée vis-à-vis d'interventions inadmissibles et, quand une intervention inadmissible est reconnue, un signal de coupure est délivré à une source de danger via une sortie de sécurité (26).
